# EUROPÄISCHE PATENTSCHRIFT

(11) **EP 0 683 895 B1**
(45) Veröffentlichungstag und Bekanntmachung des Hinweises auf die Patenterteilung: **02.02.2000**
(21) Anmeldenummer: 95901329.3
(22) Anmeldetag: 26.11.1994
(51) Int. Cl.: G01N 27/406, G01N 27/407

(54) **ISOLATIONSSCHICHTSYSTEM ZUR GALVANISCHEN TRENNUNG VON STROMKREISEN**
INSULATING LAYER SYSTEM FOR GAVANICALLY SEPARATING CIRCUITS
SYSTEME DE COUCHES ISOLANTES PERMETTANT DE SEPARER DES CIRCUITS PAR GALVANISATION

(30) Priorität: 09.12.1993 DE 4342033; 08.11.1994 DE 4439883
(43) Veröffentlichungstag der Anmeldung: 29.11.1995
(73) Patentinhaber: ROBERT BOSCH GMBH, 70442 Stuttgart (DE)
(72) Erfinder: FRIESE, Karl-Hermann, D-71229 Leonberg (DE); GEIER, Heinz, D-70499 Stuttgart (DE); GRUENWALD, Werner, D-70839 Gerlingen (DE); DE LA PRIETA, Claudio, D-70569 Stuttgart (DE)
(86) Internationale Anmeldenummer: DE9401397
(87) Internationale Veröffentlichungsnummer: WO9516199

(56) Entgegenhaltungen:
- EP-A- 0 133 820
- EP-A- 0 189 038
- EP-A- 0 203 351
- DE-A- 2 746 381
- DE-A- 4 303 633
- DATABASE WPI Derwent Publications Ltd., London, GB; AN 90-265012 & JP,A,2 186 254 (FUJIKURA CABLEWORKS) 20. Juli 1990
- PATENT ABSTRACTS OF JAPAN vol. 15, no. 270 (P-1225) 9. Juli 1991 & JP,A,03 090 851 (KYOCERA CORP) 16. April 1991
- PATENT ABSTRACTS OF JAPAN vol. 15, no. 364 (P-1252) 13. September 1991 & JP,A,03 142 353 (KYOCERA CORP) 18. Juni 1991

## Beschreibung

### Stand der Technik

Die Erfindung betrifft ein Isolationsschichtsystem gemäß dem Oberbegriff des Anspruchs 1. Derartige Schichtsysteme werden bei Gassensoren auf der Basis von Festelektrolyten eingesetzt, die mit einer Heizeinrichtung gekoppelt sind. Aus der EP-A3 189 038 ist ein Isolationsschichtsystem für Gassensoren bekannt. Zur elektrischen Isolation eines keramischen Festelektrolytsubstrates aus ZrO₂ von einem elektrisch leitenden Heizelement ist beispielsweise eine Anpassungsschicht angeordnet. Die Anpassungsschichten derartiger Schichtsysteme bestehen aus einem Gemisch aus ZrO₂ und Al₂O₃. Die elektrische Isolationswirkung bleibt unbefriedigend.

Aus EP 0 133 820 A1 ist weiter bereits ein Isolationsschichtsystem für Gassensoren bekannt, das eine Festelektrolytschicht, eine Heizeinrichtung und eine isolierende keramische Schicht aufweist, die das dreiwertige Nb₂O₃ als Zusatzstoff in einer Konzentration von 11 mol% bzw. ca. 14 Vol.-% vor dem Sintern enthält.

Aufgabe der Erfindung ist es, ein Isolationsschichtsystem mit verbesserten Isolationseigenschaften und einem guten Wärmeübergang zum Festelektrolyt zu schaffen.

### Vorteile der Erfindung

Das Isolationsschichtsystem gemäß Hauptanspruch weist die Vorteile auf, daß die galvanische Trennung zwischen Festelektrolytschicht und elektrisch leitender Schicht verbessert wird ohne die Schichtdicke der isolierenden Schicht zu erhöhen. Die gleichzeitige Verbesserung der isolierenden Wirkung wird dadurch erzielt, daß fünfwertige Kationen des Zusatzstoffes in das Wirtsgitter der Festelektrolytschicht beim Sinterprozeß eindiffundieren.

Durch die in den Unteransprüchen aufgeführten Maßnahmen sind vorteilhafte Weiterbildungen des im Hauptanspruch angegebenen Schichtsystems möglich. Besonders vorteilhaft ist die Auswahl eines Mengenverhältnisses des Zusatzstoffes, bei dem einerseits eine isolierende Wirkung in der Festelektrolytschicht erzielt wird, andererseits aber die Ionenleitfähigkeit des Festelektrolyten nicht über die Maßen beeinträchtigt wird. Als ein besonders geeigneter Zusatzstoff hat sich Nb₂O₅ in Verbindung mit einem ZrO₂-Festelektrolyt erwiesen. Besonders vorteilhaft für eine gute Wärmeschockbeständigkeit ist es, wenn die Wärmeausdehnungskoeffizienten von Festelektrolytschicht und Isolierschicht aneinander angepaßt werden. Dies kann einerseits dadurch geschehen, daß eine Anpassungsschicht zwischen Festelektrolytschicht und Isolierschicht eingefügt wird, die Materialbestandteile der Festelektrolytschicht und der Isolierschicht enthält. Eine andere Möglichkeit besteht darin, das Material der Isolierschicht derart auszuwählen, daß deren Wärmeausdehnungskoeffizient sich dem Wärmeausdehnungskoeffizient der Festelektrolytschicht annähert. Ein derartiges Material ist beispielsweise Forsterit oder Forsterit/Periklas. Es ist aber durchaus denkbar, für die Isolierschicht ein Material mit einem höheren Wärmeausdehnungskoeffizienten als das Material der Festelektrolytschicht auszuwählen. Dadurch wird der Tatsache Rechnung getragen, daß Festelektrolyte Druckspannungen besser standhalten als Zugspannungen.

Eine Ausführungsform mit sehr gutem Wärmeübergang wird erzielt, wenn das Heizelement zwischen zwei Isolierschichten eingebettet ist, von denen die dem sensitiven Bereich zugewandte Isolierschicht eine höhere Wärmeleitfähigkeit aufweist als die dem sensitiven Bereich abgewandte weitere Isolierschicht. Daraus folgt eine verstärkte Wärmeleitung in Richtung des sensitiven Bereichs des Gassensors.

Durch die Anpassung der Sinterschrumpfung und des Wärmeausdehnungskoeffizienten von Isolierschicht und Festelektrolytschicht wird erreicht, daß die Thermoschockbeständigkeit erhöht und Rißbildungen in der Isolierschicht und/oder in der Festelektrolytschicht vermieden werden.

Eine weitere Ausführungsform entsteht durch mehr als eine Anpassungsschicht. Werden die Mischungen der Materialbestandteile jeder Anpassungsschicht geeignet gewählt, so erfolgt beim Sintern eine verbesserte und schnellere Ausbildung der Konzentrationsprofile der einzelnen Materialbestandteile der Anpassungsschichten.

### Zeichnung

Ausführungsbeispiele der Erfindung sind in der Zeichnung dargestellt und in der nachfolgenden Beschreibung näher erläutert. Figur 1 zeigt ein Schichtsystem einer ersten Ausführungsform, Figur 2 ein Schichtsystem einer zweiten Ausführungsform mit zwei Anpassungsschichten, Figur 3 ein Schichtsystem einer dritten Ausführungsform mit einem Heizelement in einer Trägerschicht, Figur 4 zeigt eine schematische Schnittdarstellung eines Gassensors und Figur 5 ein MgO-SiO₂-Phasendiagramm.

### Beschreibung der Ausführungsbeispiele

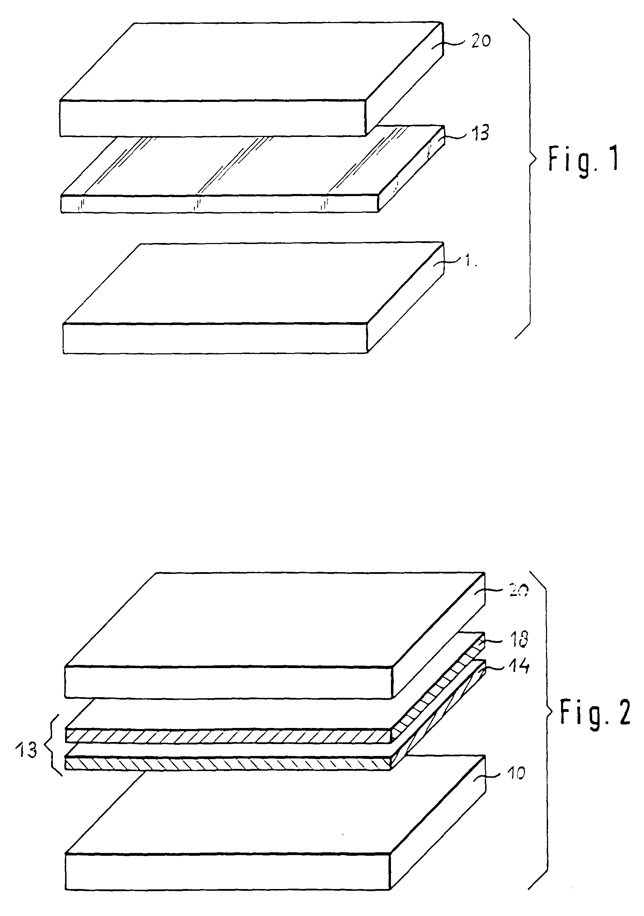

Das Isolationsschichtsystem gemäß Figur 1 besteht aus einer Festelektrolytschicht 10, einer elektrisch leitenden Schicht 20 und einer dazwischenliegenden isolierenden Schicht 13. Dieses planare Schichtsystem bildet beispielsweise den Grundaufbau eines planaren Gassensors, bei dem die Festelektrolytschicht 10 ein Y₂O₃-stabilisierter ZrO₂-Festelektrolyt ist. Die isolierende Schicht 13 besteht beispielsweise aus Al₂O₃, dem vor dem Sintern bis zu 5 Vol.% Nb₂O₅ oder Ta₂O₅ beigefügt wird. Die elektrisch leitende Schicht 20 ist beispielsweise eine Widerstandsbahn bestehend aus Metallen, Metalllegierungen oder elektrisch leitfähigen Keramiken. Die weiteren Funktionselemente des Gassensors sind in Figur 1 nicht dargestellt.

Die in Figur 1 dargestellten Schichten werden zusammenlaminiert und anschließend bei 1200 bis 1500° C gesintert. Dabei diffundiert das in der isolierenden Schicht 13 enthaltene Nb⁵⁺ bzw. Ta⁵⁺-Kation des Nb₂O₅ bzw. Ta₂O₅ in die angrenzende Festelektrolytschicht 10 und bildet in der Grenzfläche der Festelektrolytschicht 10 eine Dotierungszone, mit der Wirkung, daß der elektrische Widerstand des Festelektrolytmaterials in diesem Bereich erhöht wird.

Dadurch ist es möglich, die Isolationswirkung der isolierenden Schicht 13 zu erhöhen, ohne deren Schichtdicke zu steigern. Eine größere Schichtdicke der isolierenden Schicht 13 würde nämlich die Haftfestigkeit zwischen isolierender Schicht 13 und Festelektrolytschicht 10 und die Wärmeleitung zwischen der elektrisch leitenden Schicht 20 und der Festelektrolytschicht 10 verschlechtern.

Gegenüber der Festelektrolytschicht 10 aus stabilisierter ZrO₂-Keramik oder HfO₂-Keramik besitzt die elektrisch leitende Schicht 20 einen abweichenden Wärmeausdehnungskoeffizienten. Zur Angleichung der Wärmeausdehnungskoeffizienten zwischen Festelektrolytschicht 10 und elektrisch leitender Schicht 20 ist in Figur 2 die isolierende Schicht 13 aus einer Isolierschicht 18 und einer Anpassungsschicht 14 gebildet.

Die chemische Zusammensetzung der Schichten der isolierenden Schicht 13 geht aus der nachfolgenden Tabelle 1 hervor, wobei die Volumenverhältnisse für die Herstellung vor dem Sintern eingestellt werden. Die Klammer bei (Y₂O₃) in der Tabelle 1 bedeutet, daß Y₂O₃ in einem kleinen Anteil bis zu 5 Volumenprozent als substituierender Stoff den Grundbestandteil ZrO₂ stabilisierend ersetzt. Die Klammer (Nb₂O₅) bedeutet, daß Nb₂O₅ bis zu 5 Volumenprozent die ZrO₂/Al₂O₃-Mischung der isolierenden Schicht 13 (Proben 1) beziehungsweise der Anpassungsschichten 14, 15 und die Isolierschicht 18 (Proben 2 und 3) ersetzt. Alle Zahlenangaben beziehen sich auf das Volumen herzustellender Mischungen.

**Tabelle**

| Schichten | 13 | 14 | 15 | 18 |
|---|---|---|---|---|
| Probe 1 (Fig. 1) | Al₂O₃ (Nb₂O₅) | | | |
| Probe 2 (Fig. 2) | | 50:50 ZrO₂:Al₂O₃ (Nb₂O₅) | | Al₂O₃ |
| Probe 3 (Fig. 3) | | 70:30 ZrO₂:Al₂O₃ (Nb₂O₅) | 30:70 ZrO₂:Al₂O₃ (Nb₂O₅) | Al₂O₃ |
| Probe 4 | Fosterit (Nb₂O₅) | | | |
| Probe 5 | 70:30 Fosterit: (Nb₂O₅) | MgO | | |

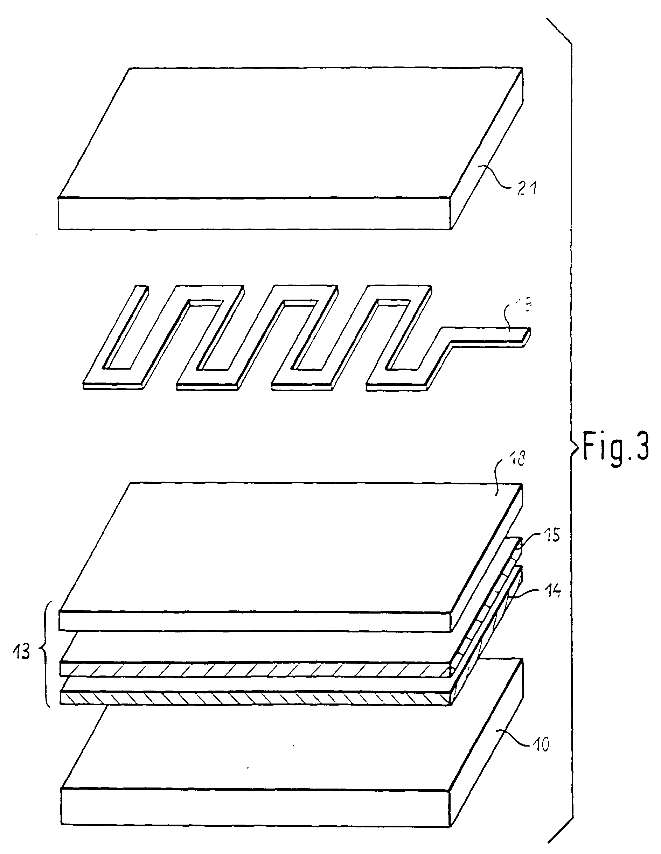

Aus Figur 3 geht ein weiteres Ausführungsbeispiel eines Isolationsschichtsystems hervor, bei dem als elektrisch leitende Schicht 20 ein Heizelement 19 vorgesehen ist. Ferner besitzt das Schichtsystem hierbei zwei Anpassungsschichten 14 und 15 zur Einstellung der Konzentrationsprofile von ZrO₂ und Al₂O₃ und eine Isolierschicht 18. Die isolierende Schicht 13 besteht aus den Schichten 14, 15 und 18. Das Heizelement 19 wird von einer mechanischen Schutzschicht 21 aus isolierendem Material, beispielsweise Al₂O₃, abgedeckt.

Zur Anpassung des Wärmeausdehnungskoeffizienten besteht die Anpassungsschicht 14 aus einem Gemisch des Materials der Festelektrolytschicht 10, dem Hauptbestandteil, und dem Material der Isolierschicht 18, dem Nebenbestandteil, das heißt, zweckmäßig aus einem Gemisch aus ZrO₂ und Al₂O₃ mit dem Zusatzstoff Nb₂O₅ oder Ta₂O₅.

Die Anpassungsschichten 14 und 15 wurden so ausgeführt, daß zwischen der Festelektrolytschicht 10 und dem elektrisch leitenden Heizleiter 19 ein Schicht-Abstand von 10 Mikrometern aus mindestens den Anpassungsschichten 14 und 15 und einer Isolierschicht 18 für ein planares Schichtsystem entsteht. Bei dem Ausführungsbeispiel der Probe 3 gemäß Figur 3 ist es genauso denkbar, den Nb₂O₅-Zusatz nur der zweiten Anpassungsschicht 15 zuzugeben, jedoch besitzt das Nb₂O₅ in der Anpassungsschicht 15 nach dem Sintern keinen Einfluß auf den Widerstand des Substrats 10. Analoges gilt für die Isolierschicht 18 der Probe 3 und der Probe 2.

Es ist denkbar, das Schichtsystem in beliebiger Geometrie, z. B. mit gekrümmten Schichten, wie es bei Fingersonden auftritt, auszuführen. Es ist ferner denkbar, die Anpassungsschichten zwischen einer ZrO₂-Schicht und einer Elektrodenschutzschicht anzuordnen.

Die Herstellung des erfindungsgemäßen Schichtsystems soll am dritten Ausführungsbeispiel (Fig. 3, Probe 3) erläutert werden. In einem ersten Schritt wird auf die Festelektrolytschicht 10, z. B. ein ZrO₂-Substrat (grüne Folie oder gepreßt), die erste Anpassungsschicht 14 aus 70 Volumenteilen Zirkoniumdioxid und 30 Volumenteilen Aluminiumoxid, das sind zusammen 95 Volumenprozent des Materials der ersten Anpassungsschicht 14 und 5 Volumenprozent Nb₂O₅, von 5 Mikrometern Dicke gedruckt. In einem zweiten Schritt wird auf das aus zwei Schichten bestehende Schichtsystem (10, 14) eine zweite Anpassungsschicht 15, z. B. eine Schicht aus 30 Volumenteilen Zirkoniumdioxid und 70 Volumenteilen Aluminiumoxid, das sind zusammen 95 Volumenprozent des Materials der Anpassungsschicht 15, und 5 Volumenprozent Nb₂O₅ von 5 Mikrometern Dicke gedruckt. In einem dritten Schritt wird auf das aus drei Schichten (10, 14, 15) bestehende Schichtsystem die Isolierschicht 18, z. B. aus reinem Aluminiumoxid, aufgebracht. Schließlich wird noch der elektrisch leitende Heizleiter 19 aus Cermet oder elektrisch leitender Keramik und eine isolierende Al₂O₃-Deckschicht 21 zugefügt. Alternativ kann der Heizer auch nach oben hin in ein Schichtsystem eingebettet werden. In einem abschließenden fünften Schritt wird das Schichtsystem (10, 14, 15, 18, 19, 21) in einem der üblichen Ofen bei 1000 Grad Celsius fertiggesintert.

Die Tabelle 1 enthält die für die Lösung der Aufgabe geeignetsten Beispiele der verschiedenen Isolationsschichtsysteme. Für einen optimalen Ausgleich der thermischen Spannungen und gute Haftung der Schichten des vierlagigen Schichtsystems, beziehungsweise des fünflagigen Schichtsystems (ohne Abdeckschicht 21) der Figuren 2 und 3 sollte die isolierende Schicht 13 nicht wesentlich dicker als 10 Mikrometer sein, um einen ausreichenden Wärmefluß vom Heizelement 19 zur Festelektrolytschicht 10 hin zu gewährleisten. Als Flußmittel wurden Quarzsand und Erdalkalioxide verwendet.

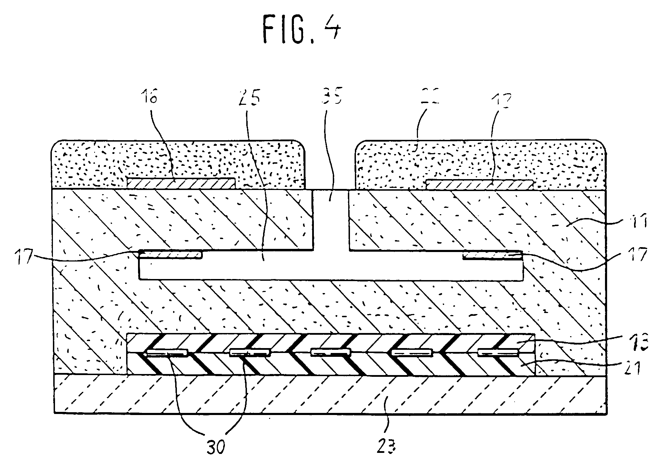

Der in der Figur 4 dargestellte Festelektrolytsensor ist ein Gassensor, der zur Bestimmung des Sauerstoffgehalts in Gasen dient, insbesondere in Abgasen von Verbrennungsmotoren. Er funktioniert nach dem Grenzstromprinzip, das bereits in der DE-OS 38 11 713 beschrieben ist.

Der Gassensor besitzt einen sauerstoffionenleitenden Festelektrolyt 11, mit einer äußeren Pumpelektrode 12 und einer inneren Pumpelektrode 17. Der Festelektrolytkörper 11, der im vorliegenden Beispiel aus Yttrium-stabilisiertem Zirkoniumdioxid besteht, ist beispielsweise aus mehreren Plättchen beziehungsweise Folien aufgebaut. Im Festelektrolyt 11 ist ein Hohlraum ausgebildet, der einen flachen zylindrischen Diffusionsspalt 25 bildet, wobei das Meßgas über einen Diffusionskanal 35 zum Diffusionsspalt 25 über einen Diffusionskanal 35 zum Diffusionsspalt 25 geleitet wird. Die Pumpelektroden 12 und 17 sind zweckmäßigerweise ringförmig um den Diffusionskanal 35 ausgebildet und bestehen aus einem das Meßgas katalysierenden, porösen Material, wie beispielsweise Platin- oder Platincermet. Die äußere Pumpelektrode 12 ist vorzugsweise mit einer porösen Schutzschicht 22 abgedeckt.

Ein Heizelement 30 ist zwischen einer den Pumpelektroden 12, 17 zugewandten Isolierschicht 13 und einer den Pumpelektroden 12, 17 abgewandten Isolierschicht 21 positioniert. An die Isolierschicht 21 grenzt ein keramischer Träger 23 an, der beispielsweise ebenfalls eine Festelektrolytfolie ist.

Zur Herstellung des Gassensors wird auf die DE-OS 38 11 713 verwiesen. Dort werden die verwendeten Festelektrolytfolien und die zur Herstellung der einzelnen Schichten und Elektroden ausgeführten Siebdruckschritte beschrieben.

Es ist gleichfalls denkbar, das beschriebene Ausführungsbeispiel für elektrochemische Meßzellen anzuwenden, die nach dem Nernst-Prinzip arbeiten. Der Unterschied gegenüber der Pumpzelle besteht lediglich darin, daß der Diffusionsspalt 25 über einen Referenzkanal einem Referenzgas, beispielsweise Luft, zugeführt ist. Bei derartigen Meßzellen ist die eine Elektrode dem Meßgas und die andere Elektrode dem Referenzgas ausgesetzt. Auch diese Meßzellen sind mit einem Heizelement ausgeführt, so daß auch hierbei das beschriebene Problem zwischen der Isolierschicht und dem Festelektrolyt besteht. Gleiches gilt für sogenannte Breitbandsensoren, die eine Nernst-Zelle und eine Pumpzelle besitzen.

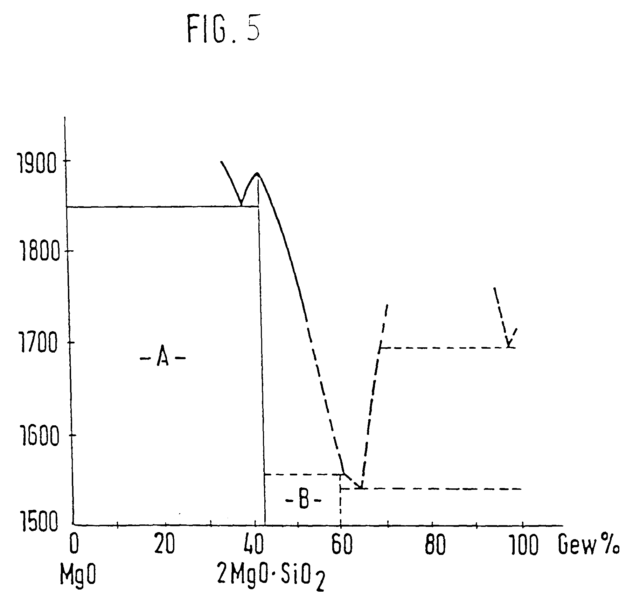

Figur 5 zeigt ein Mg0-SiO₂-Phasendiagramm nach Bowen und Andersen, Am. J. Sci. [4], 37, 488 (1914) mit der Forsterit-Phase 2MgO SiO₂. Das Forsterit in fester Form kommt hierbei in den Phasengebieten A und B vor. Einen für die Isolierschichten 13 und 21 in bezug auf den Yttriumstabilisieten ZrO₂-Festelektrolyt 11, geeigneten Wärmeausdehnungskoeffizienten besitzt das Forsterit sowie das im Phasengebiet A vorliegende Periklas-/Forsterit-Eutektikum. Besonders geeignet ist eine Zusammensetzung von 70 Gew% Forsterit und 30 Gew% Periklas. Nach links im Phasendiagramm zum SiO₂ hin nimmt der Wärmeausdehnungskoeffizent der MgO.SiO₂-Phasen ab. Der Bereich zwischen Forsterit und SiO₂ ist insofern für die Erfindung von untergeordnetem Interesse. Das Phasendiagramm ist dort daher gestrichelt angedeutet.

Es ist als weitere Ausführungsform möglich, die dem sensitiven Bereich abgewandte Isolierschicht 21 aus einem Material auszuführen, welches eine geringere Wärmeleitfähigkeit als das Material der dem sensitiven Bereich zugewandten Isolierschicht 13 besitzt. Damit wird ein gezielter Wärmefluß in Richtung des sensitiven Bereichs mit den Pumpelektroden 12, 17 erreicht. Eine solche Isolierschicht 21 in Kombination mit einer Isolierschicht 13 aus einem Forsterit-/Periklas-Eutektikum mit 70 Gew% Forsterit und 30 Gew% Periklas ist zum Beispiel eine reine Forsterit-Schicht beziehungsweise eine Forsterit-Schicht mit einem geringerem Periklas-Anteil (z. B. < 5 Gew%). An die Materialien der Isolierschicht 13 sind die üblichen Reinheitsforderungen zu stellen, wie beispielsweise sehr geringer Gehalt an elektronenleitenden sowie an ionenleitenden Stoffen. Außerdem kann die Sinteraktivität der Isolierschichten 13, 21 durch entsprechende Flußmittelzusätze angepaßt werden. Die Sinteraktivität der Isolationsschichten kann durch die Wahl der Rohstoffe gesteuert werden, beispielsweise durch Mischungen von MgO, SiO₂ und Mg-Silikaten in geeigneten Mischungsverhältnissen und Korngrößen. Zur Vermeidung von unerwünscht starken Sinterreaktionen zwischen der Isolierschicht 13 und dem Festelektrolyt 11 kann der Festelektrolyt 11 durch den Einsatz einer kopräzipitierten oder zumindest vorkalzinierten Yttrium-stabilierten Keramik hergestellt werden und/oder durch die Wahl von Materialien für die Isolierschicht 13, die einen vom Zr⁴⁺-Ionenradius abweichenden Kationenradius aufweisen.

Die nachfolgende Tabelle 2 zeigt eine Übersicht über die Wärmeausdehnungskoeffizienten, die Wärmeleitfähigkeit und den Kationenradius verschiedener Materialien für Isolierschichten im Vergleich zu Yttrium-stabilisiertem Zirkoniumdioxid.

| | Wärmeausdehnungskoeffizient 10⁻⁶ (°C⁻¹) | Wärmeleitfähigkeit | Kationenradius ri (A) |
|---|---|---|---|
| MgO | 11,6 - 10,5 | > Al₂O₃ | Mg²⁺:0,66 |
| CaO | 12,6 | < Al₂O₃ | Ca²⁺:0,99 |
| SrO | 13,5 | << Al₂O₃ | Sa²⁺:1,12 |
| BaO | > 10 | << Al₂O₃ | Ba²⁺:1,34 |
| 2MgO SiO₂ | 9,8 - 10,6 | << Al₂O₃, >> PSZ/VSZ | Mg²⁺:0,66 |
| La₂O₃ | 12 - 13 | << Al₂O₃ | La³⁺:1,06 |
| Nd₂O₃ | > 10 | << Al₂O₃ | Nd³⁺:0,995 |
| Gd₂O₃ | > 10 | << Al₂O₃ | Gd³⁺:0,94 |
| Dy₂O₃ | > 10 | << Al₂O₃ | Dy³⁺:0,91 |
| Y₂O₃ stab. ZrO₂ | | | Y³⁺:0,89 |
| PSZ mit > 20% m-ZrO₂ | 9,0 - 9,8 | << Al₂O₃ | |
| PSZ mit > 95% t-ZrO₂ | 10,0 - 10,8 | << Al₂O₃ | Zr⁴⁺:0,79 |
| VSZ mit 7,8 m/o Y₂O₃ | 10,0 - 10,8 | << Al₂O₃ | |
| > 98% Al₂O₃ | 7 - 8 | | |
| 90-96% Al₂O₃ | 7,0 - 7,6 | > 98% Al₂O₃ | Al³⁺:0,51 |
| Mg-Spinell | 8,8 | < Al₂O₃ | Mg²⁺:0,66 |
| MgO Al₂O₃ | 8,1 | | |
| | | | Nb⁵⁺:0,70 |
| | | | Ta⁵⁺:0,73 |

Wie bereits erwähnt wurde als vorteilhaftes Ausführungsbeispiel ein Forsterit-/Periklas-Eutektikum gewählt. Der Wärmeausdehnungskoeffizient entspricht dem Wärmeausdehnungskoeffizent von Yttrium-stabilisiertem ZrO₂. Aus Tabelle 2 lassen sich entsprechende Kombinationen von Yttrium-stabilisiertem Zirkoniumdioxid und Isolierschichten auswählen, wobei es bei der Auswahl darauf ankommt, daß der Wärmeausdehnungskoeffizient der Isolierschicht 13 zumindest annähernd so groß oder größer ist als der Wärmeausdehnungskoeffizient des stabilisierten Zirkoniumdioxids. Zusätzlich ist es zweckmäßig, bei der Auswahl auf eine entsprechend gute Wärmeleitfähigkeit zu achten. Die Wärmeleitfähigkeit der aufgeführten Materialien ist zwar durchweg geringer als die von Al₂O₃, jedoch ist sie immer noch größer als die des stabilisierten Zirkoniumdioxids.

Ein weiterer Parameter bei der Auswahl der Stoffe für die Isolierschicht ist der Kationenradius des verwendeten Stoffs. Durch die Wahl eines entsprechend weit abweichenden Kationenradius vom Zr⁴⁺-Ionenradius wird gewährleistet, daß es zu keiner ungewünscht starken Sinterreaktion zwischen Isolierschicht 13 und Festelektrolytkörper 10 kommt.

## Patentansprüche

1. Isolationsschichtsystem zur galvanischen Trennung elektrischer Stromkreise mit einer elektrisch leitenden Festelektrolytschicht (10, 11), einer elektrisch leitenden Schicht und mindestens einer elektrisch isolierenden, keramischen Schicht (13) zwischen der Festelektrolytschicht (10, 11) und der elektrisch leitenden Schicht (19, 20, 30), **dadurch gekennzeichnet,** daß das Material wenigstens einer isolierenden Schicht (13, 14, 15, 18), die der Festelektrolytschicht (10, 11) benachbart ist, fünfwertige Metalloxide des Niobs oder Tantals als Zusatzstoffe in einer Konzentration von bis zu 5 Vol.% vor dem Sintern enthält.

2. Schichtsystem nach Anspruch 1, dadurch gekennzeichnet, daß der Zusatzstoff in einem Mengenverhältnis von bis zu 10 Volumenprozent bezogen auf das Volumen der isolierenden Schicht (13, 14, 15, 18) vorhanden ist.

3. Schichtsystem nach Anspruch 1, dadurch gekennzeichnet, daß die isolierende Schicht (13, 14, 15, 18) aus Aluminiumoxid, Forsterit, einem Forsterit-/Periklas-Eutektikum, MgO, CaO, SrO, BaO, 2 Mg0 ·SiO₂, La₂O₃, Nd₂O₃, Gd₂O₃ oder Dy₂O₃ oder einem Gemisch dieser Stoffe besteht.

4. Schichtsystem nach Anspruch 3, dadurch gekennzeichnet, daß die isolierende Schicht (13, 14, 15, 18) aus einem Material besteht, dessen Wärmeausdehnungskoeffizient mindestens 90 % des Wärmeausdehnungskoeffizienten der Festelektrolytschicht (10, 11) beträgt.

5. Schichtsystem nach Anspruch 3, dadurch gekennzeichnet, daß der Wärmeausdehnungskoeffizient der isolierenden Schicht (13, 14, 15, 18) gleich oder größer als der Wärmeausdehnungskoeffizient der Festelektrolytschicht (10, 11) ist.

6. Schichtsystem nach Anspruch 1, dadurch gekennzeichnet, daß die isolierende Schicht (13, 14, 15, 18) aus mindestens einer Isolierschicht und mindestens einer Anpassungsschicht besteht, wobei die Anpassungsschicht angrenzend an die Festelektrolytschicht (10, 11) angeordnet ist, und daß der Zusatzstoff zumindest in der der Festelektrolytschicht (10, 11) benachbarten Anpassungsschicht enthalten ist.

7. Schichtsystem nach Anspruch 6, dadurch gekennzeichnet, daß die Anpassungsschicht Materialbestandteile der Festelektrolytschicht (10, 11) und der Isolierschicht enthält.

8. Schichtsystem nach Anspruch 7, dadurch gekennzeichnet, daß in der Anpassungsschicht die Materialbestandteile der Festelektrolytschicht (10, 11) und der Isolierschicht in gleichen Volumenanteilen enthalten sind.

9. Schichtsystem nach Anspruch 7, dadurch gekennzeichnet, daß mehrere Anpassungsschichten unterschiedlicher Materialzusammensetzung vorgesehen sind, wobei die Konzentration des Materialbestandteiles der Festelektrolytschicht (10, 11) zur Festelektrolytschicht hin zunimmt.

10. Schichtsystem nach Anspruch 9, dadurch gekennzeichnet, daß die Konzentration des Zusatzstoffes zur Festelektrolytschicht (10, 11) hin zunimmt.

11. Schichtsystem nach einem der Ansprüche 1 bis 10, dadurch gekennzeichnet, daß zusätzlich zur isolierenden Schicht (13, 14, 15, 18) eine weitere Isolierschicht vorgesehen ist, und daß zwischen isolierender Schicht und Isolierschicht ein Heizelement (19, 30) angeordnet ist.

12. Schichtsystem nach Anspruch 11, dadurch gekennzeichnet, daß die dem sensitiven Bereich eines Gassensors zugewandte isolierende Schicht (13, 14, 15, 18) eine höhere Wärmeleitfähigkeit als die dem sensitiven Bereich abgewandte Isolierschicht aufweist.

13. Schichtsystem nach einem der Ansprüche 1 bis 12, dadurch gekennzeichnet, daß dem Material der isolierenden Schicht (13, 14, 15, 18) und/oder der Isolierschichten Sinterhilfsmittel und/oder Porenbildner zugesetzt sind.

14. Schichtsystem nach Anspruch 1, dadurch gekennzeichnet, daß die Festelektrolytschicht (10, 11) aus stabilisiertem Zirkoniumdioxid und/oder stabilisiertem Hafniumdioxid besteht, wobei zur Stabilisierung Diyttriumtrioxid und/oder Diytterbiumtrioxid vorhanden ist.

## Claims

1. Insulation layer system for the electrical isolation of electric circuits, having an electrically conductive solid-electrolyte layer (10, 11), an electrically conductive layer and at least one electrically insulating, ceramic layer (13) between the solid-electrolyte layer (10, 11) and the electrically conductive layer (19, 20, 30), characterized in that the material of at least one insulating layer (13, 14, 15, 18), which is adjacent to the solid-electrolyte layer (10, 11), contains pentavalent metal oxides of niobium or tantalum as additives in a concentration of up to 5% by volume prior to sintering.

2. Layer system according to Claim 1, characterized in that the additive is present in a quantitative ratio of up to 10% by volume with reference to the volume of the insulating layer (13, 14, 15, 18).

3. Layer system according to Claim 1, characterized in that the insulating layer (13, 14, 15, 18) comprises aluminium oxide, forsterite, a forsterite/periclase eutectic, MgO, CaO, SrO, BaO, 2 MgO·SiO₂, La₂O₃, Nd₂O₃, Gd₂O₃ or Dy₂O₃ or a mixture of these materials.

4. Layer system according to Claim 3, characterized in that the insulating layer (13, 14, 15, 18) comprises a material whose thermal expansion coefficient is at least 90 % of the thermal expansion coefficient of the solid-electrolyte layer (10, 11).

5. Layer system according to Claim 3, characterized in that the thermal expansion coefficient of the insulating layer (13, 14, 15, 18) is greater than or equal to the thermal expansion coefficient of the solid-electrolyte layer (10, 11).

6. Layer system according to Claim 1, characterized in that the insulating layer (13, 14, 15, 18) comprises at least one insulating layer and at least one matching layer, the matching layer being arranged in a manner adjoining the solid-electrolyte layer (10, 11), and in that the additive is contained at least in the matching layer adjacent to the solid-electrolyte layer (10, 11).

7. Layer system according to Claim 6, characterized in that the matching layer contains material constituents of the solid-electrolyte layer (10, 11) and of the insulating layer.

8. Layer system according to Claim 7, characterized in that the matching layer contains the material constituents of the solid-electrolyte layer (10, 11) and of the insulating layer in equal volumetric proportions.

9. Layer system according to Claim 7, characterized in that a plurality of matching layers of varying material composition are provided, the concentration of the material constituent of the solid-electrolyte layer (10, 11) increasing towards the solid-electrolyte layer.

10. Layer system according to Claim 9, characterized in that the concentration of the additive increases towards the solid-electrolyte layer (10, 11).

11. Layer system according to one of Claims 1 to 10, characterized in that a further insulating layer is provided in addition to the insulating layer (13, 14, 15, 18), and in that a heating element (19, 30) is arranged between the insulating layer and the further insulating layer.

12. Layer system according to Claim 11, characterized in that the insulating layer (13, 14, 15, 18) facing the sensitive region of a gas sensor has a higher thermal conductivity than the insulating layer facing away from the sensitive region.

13. Layer system according to one of Claims 1 to 12, characterized in that sintering auxiliaries and/or pore formers are added to the material of the insulating layer (13, 14, 15, 18) and/or of the insulating layers.

14. Layer system according to Claim 1, characterized in that the solid-electrolyte layer (10, 11) comprises stabilized zirconium dioxide and/or stabilized hafnium dioxide, diyttrium trioxide and/or diytterbium trioxide being present for the purpose of stabilization.

## Revendications

1. Système de couches d'isolation servant à la séparation galvanique de circuits électriques, comprenant une couche d'électrolyte solide électriquement conductrice (10, 11), une couche électriquement conductrice et au moins une couche céramique (13) électriquement isolante entre la couche d'électrolyte solide (10, 11) et la couche électriquement conductrice (19, 20, 30),
caractérisé en ce que
la matière d'au moins une couche isolante (13, 14, 15, 18) qui est voisine de la couche d'électrolyte solide (10, 11), contient des oxydes métalliques de valence cinq de niobium ou de tantale comme matière additionnelle sous une concentration allant jusqu'à 5 % en volume avant le frittage.

2. Système de couches selon la revendication 1,
caractérisé en ce que
on a de la matière additionnelle dans une proportion allant jusqu'à 10 % en volume rapportée au volume de la couche isolante (13, 14, 15, 18).

3. Système de couches selon la revendication 1,
caractérisé en ce que
la couche isolante (13, 14, 15, 18) se compose d'alumine, de forstérite, d'un eutectique de forstérite et de périclase, de MgO, CaO, SrO, BaO, 2 MgO . SiO₂, La₂O₃, Nd₂O₃, Gd2O3, ou Dy2O3 ou d'un mélange de ces matières.

4. Système de couches selon la revendication 3,
caractérisé en ce que
la couche isolante (13, 14, 15, 18) se compose d'une matière dont le coefficient de dilatation thermique atteint au moins 90 % du coefficient de dilatation thermique de la couche d'électrolyte solide (10, 11).

5. Système de couches selon la revendication 3,
caractérisé en ce que le coefficient de dilatation thermique de la couche isolante (13, 14, 15, 18) est égal ou supérieur au coefficient de dilatation thermique de la couche d'électrolyte solide (10, 11).

6. Système de couches selon la revendication 1,
caractérisé en ce que
• la couche isolante (13, 14, 15, 18) se compose d'au moins une couche d'isolation et d'au moins une couche d'adaptation, la couche d'adaptation étant disposée de façon adjacente à la couche d'électrolyte solide (10, 11), et
• la matière additionnelle est contenue au moins dans la couche d'adaptation voisine de la couche d'électrolyte solide (10, 11).

7. Système de couches selon la revendication 6,
caractérisé en ce que
la couche d'adaptation contient des composants de matières de la couche d'électrolyte solide (10, 11) et de la couche d'isolation.

8. Système de couches selon la revendication 7,
caractérisé en ce que
dans la couche d'adaptation sont contenus les composants des matières de la couche d'électrolyte solide (10, 11) et de la couche d'isolation, dans les mêmes proportions en volume.

9. Système de couches selon la revendication 7,
caractérisé en ce que
l'on prévoit plusieurs couches d'adaptation ayant des compositions de matières différentes, la concentration du composant de la couche d'électrolyte solide (10, 11) augmentant en direction de la couche d'électrolyte solide.

10. Système de couches selon la revendication 9,
caractérisé en ce que
la concentration de la matière additionnelle augmente en direction de la couche d'électrolyte solide (10,,11).

11. Système de couches selon l'une des revendications 1 à 10,
caractérisé en ce que
• en plus de la couche isolante (13, 14, 15, 18) il est prévu une autre couche d'isolation, et
• entre la couche isolante et la couche d'isolation on dispose un élément de chauffage (19, 30).

12. Système de couches selon la revendication 11,
caractérisé en ce que
la couche isolante (13, 14, 15, 18) qui est tournée vers la zone sensible d'un détecteur à gaz, présente une conductibilité thermique plus élevée que la couche isolante tournée à l'opposé de la zone sensible.

13. Système de couches selon l'une des revendications 1 à 12,
caractérisé en ce qu'
on ajoute à la matière de la couche isolante (13, 14, 15, 18) et/ou aux couches d'isolation, des agents auxiliaires de frittage et/ou des agents formant des pores.

14. Système de couches selon la revendication 1,
caractérisé en ce que
la couche d'électrolyte solide (10, 11) consiste en du dioxyde de zirconium stabilisé et/ou du dioxyde d'hafnium stabilisé, en ayant du trioxyde de diyttrium et/ou du trioxyde de diytterbium pour la stabilisation.
